# EUROPÄISCHE PATENTSCHRIFT

(11) **EP 2 870 033 B1**
(45) Veröffentlichungstag und Bekanntmachung des Hinweises auf die Patenterteilung: **12.06.2019**
(21) Anmeldenummer: 13736519.3
(22) Anmeldetag: 29.06.2013
(51) Int. Cl.: G01D 11/24, G01D 5/244, G01B 21/22

(54) **DREHWINKELSENSOR**
ANGULAR POSITION SENSOR
CAPTEUR D'ANGLE DE ROTATION

(30) Priorität: 04.07.2012 DE 102012105969
(43) Veröffentlichungstag der Anmeldung: 13.05.2015
(73) Patentinhaber: HELLA GmbH & Co. KGaA, 59552 Lippstadt (DE)
(72) Erfinder: ELPERMANN, Thomas, 48291 Telgte (DE); PETERS, Stefan, 59557 Lippstadt (DE)
(86) Internationale Anmeldenummer: PCT/EP2013/063760
(87) Internationale Veröffentlichungsnummer: WO 2014/005961

(56) Entgegenhaltungen:
- EP-A1- 2 264 408
- EP-A1- 2 383 558
- DE-A1- 4 322 750
- DE-A1-102007 021 162

## Beschreibung

Die Erfindung betrifft einen Drehwinkelsensor zur Bestimmung einer relativen Winkelstellung bezüglich einer Referenzposition, umfassend ein Gehäuse, mindestens einen Rotor, der drehbar in dem Gehäuse gelagert ist und eine Leiterplatte mit elektrischen und/oder elektronischen Bauteilen sowie einem oder mehreren Statoren entsprechend der Anzahl der Rotoren.

Solche induktive Drehmomentsensoren sind an sich bekannt. Sie werden z.B. in Kraftfahrzeugen eingesetzt, um Drehmomente wie Lenkmomente zu ermitteln. Dies wird zunehmend erforderlich, weil vermehrt elektromotorische Servoeinrichtungen zur Lenkhilfe eingesetzt werden. Diese benötigen eine Größe des Lenkmoments zur Steuerung. Die Lenkmomente werden in einer Lenksäule durch einen Torsionsstab in Differenzwinkeln erkennbar und aus diesen berechnet. Hierfür werden die Verdrehungen an den Enden des Torsionsstabs mittels einer geeigneten Anordnung als Signale bestimmt und in Mittel zum Auswerten geleitet. Die Differenzwinkel, die durch die Torsion bewirkt werden, werden unabhängig von einer Stellung des Lenkrads bestimmt.

Weiterhin ist es z.B. für Fahrerassistenzsysteme wie ESP (elektronisches Stabilitätsprogramm für das Fahrverhalten des Fahrzeugs) wichtig, ebenfalls die Stellung (relative Winkelposition) des Lenkrads zu kennen. Hierfür wird ein Einschlag des Lenkrads (Winkel relativ zu einer Referenzposition) bestimmt. Damit auch Winkel größer oder kleiner als 360° bestimmt werden können, ist der Referenzposition eine Indexierung zugeordnet, die für jede vollständige Umdrehung des Lenkrads ein Signal erzeugt und so eine Anzahl der Umdrehungen des Lenkrads bestimmt. Es sind auch andere Bestimmungsarten möglich.

Aus der DE 43 22 750 A1 ist ein Drehwinkelsensor bekannt, bei dem ein Stator auf einer Sensorwelle gelagert ist. Sensorstrukturen auf Rotor und Stator sind durch Gleitlackschichten voneinander getrennt. Zur Verdrehsicherung des Stators gegen ein Gehäuse ist eine nichtstarre Verbindung vorgesehen.

Die EP 2 383 558 A1 offenbart einen Drehwinkelsensor, bei dem zum Bestimmen von ganzzahligen Umdrehungszahlen ein Hallsensor mit einem Flussleitblech für einen Magnetfluss angeordnet ist.

Die EP 1 932 221 B1 beschreibt einen Elektromotor mit einem Sensor zur Feststellung einer Rotorposition, wobei der Sensor in einer Anschlussplatte angeordnet ist. Der Sensor ist auf einer Leiterplatte befestigt. Der Sensor ist kein induktiver Sensor, Der Sensor ist kein induktiver Sensor, so dass keine genaue relative Positionierung eines Rotors zu einem Stator einzuhalten ist. Daher ist eine genaue Positionierung der Leiterplatte ohne wesentliche Bedeutung und nicht beschrieben.

Aus der DE 43 22 750 A1 ist ein Drehwinkelsensor bekannt, bei dem ein Stator auf einer Sensorwelle gelagert ist. Sensorstrukturen auf Stator und Rotor sind durch Gleitlackschichten voneinander getrennt. Zur Verdrehsicherung des Stators gegen ein Gehäuse ist eine nichtstarre Verbindung vorgesehen, wobei der Stator an seinem Außenumfang mindestens eine Aussparung aufweist, in die ein am Gehäuse angeordneter Klemmköper form- oder kraftschlüssig eingreift.

Die EP 2 383 558 A1 offenbart einen Drehwinkelsensor, bei dem zum Bestimmen von ganzzahligen Umdrehungszahlen ein Hallsensor mit einem Flussleitblech für einen Magnetfluss angeordnet ist. Der Hallsensor und Statoren sind auf einer Leiterplatte angeordnet. Zur Positionierung der Leiterplatte in Sensorgehäuse weist die Leiterplatte neben einer Mittelbohrung zur Aufnahme eines Torsionsstabes zusätzliche Aussparungen auf.

Aus der EP 2 264 408 A1 ist ein Rotationspositionssensor bekannt, bei dem eine Leiterplatte, auf dem ein statisches Sensorelement angeordnet ist, durch Rastverbindungen, welche im Sensorgehäuse angeordnet sind, fixiert wird.

Aus der DE 10 2007 021 162 A1 ist eine Winkelsensoreinheit bekannt, bei der eine Leiterplatte, auf der ein Statorelement angeordnet ist, durch im Gehäuse angeordnete elastisch biegbare Schnapphaken fixiert ist.

Für eine hohe Messgenauigkeit des Drehwinkelsensors ist es von besonderer Bedeutung, dass ein Rotor und ein zugehöriger Stator möglichst exakte relative Positionen einnehmen und einhalten. Hierfür ist es wichtig, dass eine Leiterplatte, auf welcher der Stator ausgebildet ist, eine genaue Position in einem Gehäuse einnimmt, in dem der Rotor angeordnet ist. Das Gleiche gilt entsprechend bei der Anordnung mehrerer Rotoren und Statoren.

Es ist die Aufgabe der Erfindung, einen Drehwinkelsensor zu schaffen, der eine besonders präzise Ausrichtung einer Leiterplatte in einem Gehäuse erlaubt und hierbei einfach zu montieren ist.

Die Aufgabe ist durch die Merkmale des Anspruchs 1 gelöst. In dem Gehäuse sind Lagerflächen für die Leiterplatte unmittelbar radial neben dem mindestens einen Stator ausgebildet, und Klemmstrukturen zum Positionieren der Leiterplatte sind radial zu dem Stator ausgerichtet. Die unmittelbare Nähe der Lagerflächen zu dem Stator bewirkt, dass dieser besonders exakt axial - das bedeutet in Richtung der Drehachse des Rotors - positionierbar ist und eine Schieflage des Stators vermieden wird. Daher ist die Einhaltung eines vorbestimmten Abstands zwischen dem Stator und einer zugehörigen Rotorstruktur gewährleistet. Die radiale Ausrichtung der Klemmstrukturen gewährleistet eine exakte Zentrierung der Leiterplatte zu dem Rotor und damit zu der Rotorstruktur. Dabei weist die Leiterplatte an ihrem Außenumfang den Klemmstrukturen entsprechende Aussparungen auf. Erfindungsgemäß ist an jeder der Klemmstrukturen abscherbare Lamellen ausgebildet, wobei die Lamellen zu der zugehörigen Aussparung ein Übermaß aufweisen. Beim Einsetzen der Leiterplatte in das Gehäuse wird der Teil der Lamellen, der dem Übermaß entspricht, von den Klemmstrukturen abgeschert.

Die Unteransprüche beschreiben die vorteilhafte Ausgestaltung der Erfindung.

In einer Ausgestaltung sind die Klemmstrukturen in der Draufsicht T-förmig. Hierdurch ergibt sich eine ausreichende Anlagefläche für die Leiterplatte bei gleichzeitig möglichst geringem Materialeinsatz.

Durch die erfindungsgemäß an den Klemmstrukturen ausgebildeten abscherbaren Lamellen lassen sich Fertigungstoleranzen und unterschiedliche Wärmedehnung zwischen der Leiterplatte und dem Gehäuse ausgleichen. Hierbei wird vermieden, dass die Leiterplatte eine exzentrische Position relativ zu dem Stator einnimmt.

In einer weiteren Ausgestaltung sind Taschen um die Klemmstrukturen ausgebildet. Diese nehmen Teile der Lamellen auf, die beim Einsetzen der Leiterplatte in das Gehäuse abgeschert werden. Diese abgescherten Teile können daher keine mechanischen Störungen verursachen.

In einer weiteren Ausgestaltung ist die Leiterplatte zwischen dem Gehäuse und einem zweiten Deckel eingeklemmt. Hierdurch wird die axiale Positionierung der Leiterplatte zusätzlich gesichert, auch wenn die unterschiedliche Wärmedehnung wirkt.

In einer weiteren Ausgestaltung weist die Leiterplatte eine Bohrung auf, an deren Umfang Hilfsbohrungen eingelassen sind. Dies erleichtert die genaue automatisierte Montage des Drehwinkelsensors.

Anhand der beigefügten Zeichnung wird die Erfindung nachfolgend näher erläutert. Dabei zeigen:
- Figur 1: eine Explosionsdarstellung eines Drehwinkelsensors,
- Figur 2: eine Draufsicht auf ein Gehäuse des Drehwinkelsensors,
- Figur 3: eine perspektivische Ansicht auf das Gehäuse mit Leiterplatte und
- Figur 4: einen senkrechten Schnitt durch einen Teil des Drehwinkelsensors.

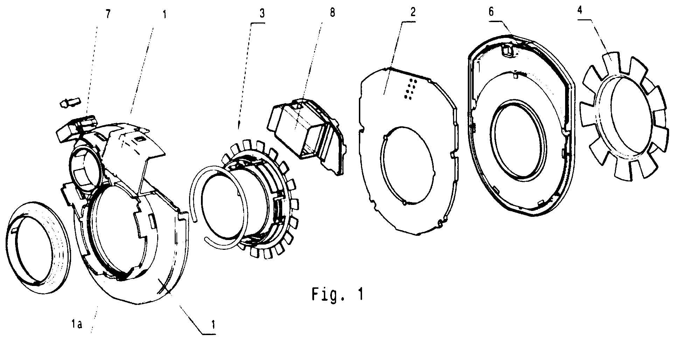

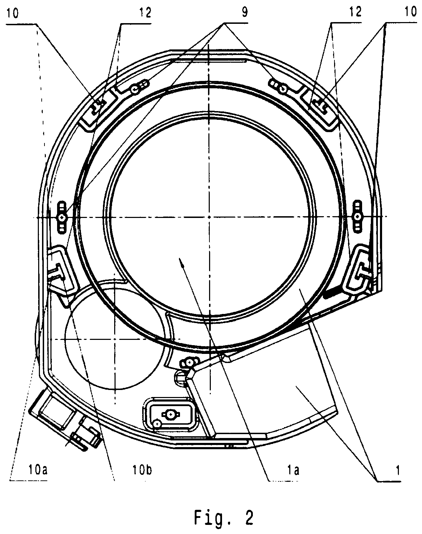

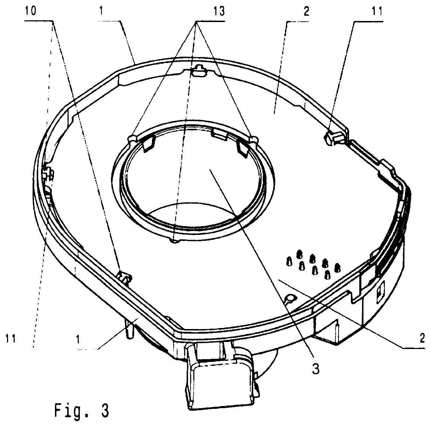

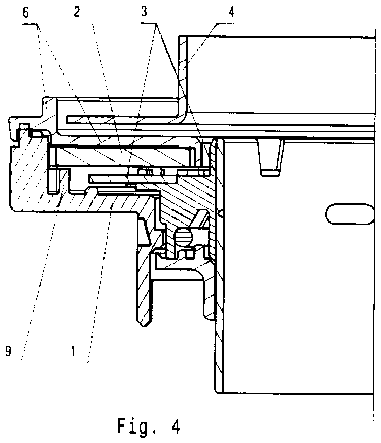

Wie aus den Figuren 1 bis 4 ersichtlich umfasst ein Drehwinkelsensor ein Gehäuse 1, in beziehungsweise an dem eine Leiterplatte 2 befestigt sowie zwei Rotoren 3, 4 mit unterschiedlichen Rotorstrukturen drehbar gelagert sind. Die zwei Hauptflächen des Gehäuses 1 sind mit jeweils einem Deckel 6 verschlossen, von denen einer nicht dargestellt ist. Der Drehwinkelsensor ist z.B. in einem Kraftfahrzeug einer Lenksäule zugeordnet, wobei die Rotoren 3, 4 mit dieser mitdrehen. Das Gehäuse 1 weist eine entsprechende kreisförmige Öffnung 1a auf, die in etwa zentrisch angeordnet ist. Zum Befestigen des Gehäuses 1 an einem feststehenden Teil des Kraftfahrzeugs ist ein Verbindungsstück 7 angeordnet, damit das Gehäuse 1 relativ zu der Lenkbewegung unbeweglich ist.

Die Leiterplatte 2 weist den Rotoren 3, 4 zugeordnete kreisförmige Statoren in Form von z.B. Leiterbahnen sowie elektrische und/oder elektronische Bauteile auf, wobei jeder Stator auf einer zugeordneten Hauptfläche der Leiterplatte 2 ausgebildet ist. Die Statoren sind konzentrisch um eine im Wesentlichen kreisförmige Bohrung in der Leiterplatte 2 angeordnet, wobei die Bohrung konzentrisch zu der Öffnung 1a ist. Die Leiterplatte 2 ist genau in einer vorbestimmten Position in dem Gehäuse 1 fixiert. An der Leiterplatte 2 ist ein Stecker 8 befestigt und elektrisch angeschlossen, der bei montiertem Drehwinkelsensor an dem Gehäuse 1 gehalten ist.

Die Leiterplatte 2 ist klemmend in dem Gehäuse 1 gelagert.

Für die exakte axiale Positionierung sind in dem Gehäuse 1 eine Vielzahl von Lagerflächen 9 in Form von kurzen Stegen angeordnet, die radial um die Öffnung 1a verteilt sind. In der Draufsicht gesehen obere Flächen der Lagerflächen 9 liegen in einer Lagerebene, die bei montieren Rotoren 3, 4 einen vorbestimmten Abstand zu den Rotorstrukturen aufweist. Zwischen den Lagerflächen 9 und den äußeren Umfängen der Statoren sind gleichmäßige geringe Abstände eingehalten. In dem zweiten Deckel 6, der mit dem Gehäuse 1 bei der Montage des Drehwinkelsensors mittels Laser verschweißt wird, sind mit den Lagerflächen 9 korrespondierende Gegenhalter angeordnet, so dass die Leiterplatte 2 eingeklemmt ist. Insgesamt ist sichergestellt, dass besonders die Statoren in ihrer Position sind und exakt den vorbestimmten axialen Abstand zu den Rotoren 3, 4 einhalten.

Weiterhin sind in dem Gehäuse 1 Klemmstrukturen 10 angeordnet, die in der Draufsicht einen T-förmigen Querschnitt aufweisen. Hierbei erstreckt sich jede Klemmstruktur 10 von einem Boden des Gehäuses 1 aus der Lagerebene heraus. Ein Fuß 10a des T ist an eine Innenwand des Gehäuses 1 angeformt und streng radial zu der Bohrung ausgerichtet. Eine Schulter 10b des T ist daher für jede Klemmstruktur 10 rechtwinklig zu dem Radius. Die Schulter 10b der Klemmstruktur 10 dient der klemmenden Befestigung der Leiterplatte 2, die an ihrem Außenumfang den Klemmstrukturen 10 entsprechende Aussparungen 11 aufweist. Die Schulter 10b jeder Klemmstruktur 10 ist an ihrem oberen Ende angeschrägt und ist an ihren Flächen, die nicht mit dem Fuß 10a in Verbindung stehen, mit feinen Lamellen versehen. Die Lamellen weisen zu der zugehörigen Aussparung 11 ein Übermaß auf, das heißt, dass die Klemmstruktur 10 einschließlich der Lamellen größere Abmessungen aufweist als die Aussparung. Dies ermöglicht die exakte radiale Ausrichtung der Leiterplatte 2 in dem Gehäuse 1, wobei die elastische Struktur der Lamellen Dehnungsunterschiede ausgleicht und so eine weitestgehend spannungsfreie Lagerung der Leiterplatte 2 erlaubt.

Um jede Klemmstruktur 10 ist eine Tasche 12 gebildet, die z.B. halbkreisförmig an die Wand des Gehäuses 1 angeformt ist. Ein oberes Ende der Tasche 12 liegt in der Lagerebene.

An dem Umfang der Bohrung sind Hilfsbohrungen 13 in die Leiterplatte 2 beabstandet eingelassen, die bei dem Zusammenbau des Drehwinkelsensors als Positionierhilfen für automatisiertes Montagewerkzeug dienen und eine exakte relative Positionierung der Leiterplatte 2 zu dem ersten Rotor 3 ermöglichen.

Beim Einsetzen der Leiterplatte 2 in das Gehäuse 1 wird der Teil der Lamellen, der dem Übermaß entspricht, von den Klemmstrukturen 11 abgeschert und fällt in die zugehörigen Taschen 12. Die Leiterplatte 2 ist so ohne jedes Spiel und ohne wesentliche mechanische Spannung klemmend in dem Gehäuse 1 gehalten. Da die eingesetzte Leiterplatte 2 die Taschen 12 nach oben abschließt, sind die abgescherten Teile sicher eingeschlossen und können keine mechanischen Störungen des Drehwinkelsensors verursachen.

### Bezugszeichenliste

- 1: Gehäuse
- 1a: Öffnung
- 2: Leiterplatte
- 3: erster Rotor
- 4: zweiter Rotor
- 5:
- 6: zweiter Deckel
- 7: Verbindungsbauteil
- 8: Stecker
- 9: Lagerfläche
- 10: Klemmstruktur
- 11: Aussparung
- 12: Tasche
- 13: Hilfsbohrung

## Patentansprüche

1. Drehwinkelsensor zur Bestimmung einer relativen Winkelstellung bezüglich einer Referenzposition, umfassend
• ein Gehäuse (1),
• mindestens einen Rotor (3, 4), der drehbar in dem Gehäuse (1) gelagert ist,
• und eine Leiterplatte (2) mit elektrischen und/oder elektronischen Bauteilen sowie einem oder mehreren Statoren entsprechend der Anzahl der Rotoren (3, 4),
wobei in dem Gehäuse (1) Lagerflächen (9) für die Leiterplatte (2) unmittelbar radial neben dem Stator ausgebildet sind,
wobei in dem Gehäuse (1) Klemmstrukturen (10) zum Positionieren der Leiterplatte (2) radial zu dem Stator ausgerichtet sind,
wobei die Leiterplatte (2) an ihrem Außenumfang den Klemmstrukturen (10) entsprechende Aussparungen (11) aufweist,
**dadurch gekennzeichnet, dass**
an jeder der Klemmstrukturen (10) abscherbare Lamellen ausgebildet sind,
die Lamellen zu der zugehörigen Aussparung (11) ein Übermaß aufweisen,
beim Einsetzen der Leiterplatte (2) in das Gehäuse der Teil der Lamellen, der dem Übermaß entspricht, von den Klemmstrukturen (10) abgeschert wird.

2. Drehwinkelsensor nach Anspruch 1, **dadurch gekennzeichnet, dass** die Klemmstrukturen (10) in der Draufsicht T-förmig sind.

3. Drehwinkelsensor nach Anspruch 1 oder 2, **dadurch gekennzeichnet, dass** um jede Klemmstruktur (10) eine Tasche (12) ausgebildet ist.

4. Drehwinkelsensor nach einem der Ansprüche 1 bis 3, **dadurch gekennzeichnet, dass** die Leiterplatte (2) zwischen dem Gehäuse (1) und einem zweiten Deckel (6) eingeklemmt ist.

5. Drehwinkelsensor nach einem der Ansprüche 1 bis 4, **dadurch gekennzeichnet, dass** die Leiterplatte (2) eine Bohrung aufweist, an deren Umfang Hilfsbohrungen (13) eingelassen sind.

## Claims

1. Rotary angle sensor to determine a relative angle setting in relation to a reference position, comprising
• a housing (1)
• at least one rotor (3, 4) that is rotatable mounted in the housing
• and a printed circuit board (2) with electric and/or electronic components and one or more stators matching the number of rotors (3, 4)
where, in the housing (1), bearing surfaces (9) are formed for the printed circuit board (2) radially directly adjacent to the stator,
where, in the housing (1), clamping structures (10) are aligned radially to the stator to position the printed circuit board (2),
where the printed circuit board (2) has on its circumference recesses (11) matching the clamping structures (10)
**characterized in that**
slats that can be sheared off are formed on each of the clamping structures (10),
the slats being oversized in relation to the associated recess (11)
that part of the slats corresponding to the oversize is sheared off from the clamping structures (10) when the printed circuit board (2) is inserted into the housing.

2. Rotary angle sensor according to Claim 1, **characterized in that** the
clamping structures (10) are T-shaped when viewed from above.

3. Rotary angle sensor according to Claim 1 or 2 **characterized in that** a pocket (12) is formed around each clamping structure (10).

4. Rotary angle sensor according to one of Claims 1 through 3 **characterized in that** the printed circuit board (2) is clamped between the housing (1) and a second cover (6)

5. Rotary angle sensor according to one of Claims 1 through 4 **characterized in that** the printed circuit board (2) has a drilled hole at the circumference of which auxiliary holes (13) have been made.

## Revendications

1. Capteur de rotation pour la détection d'une position angulaire relative par rapport à une position de référence, comprenant
• un boîtier (1),
• au moins un rotor (3, 4) disposé dans le boîtier (1) de manière à pouvoir pivoter,
• et un circuit imprimé (2) avec des composants électriques et/ou électroniques, ainsi qu'un ou plusieurs stators, en fonction du nombre de rotors (3, 4),
sachant que des surfaces de contact (9) pour le circuit imprimé (2) sont placées juste à côté du stator selon un axe radial dans le boîtier (1),
sachant que des éléments de blocage (10) pour le positionnement du circuit imprimé (2) sont positionnés dans le boîtier (1) selon un axe radial par rapport au stator,
sachant que le circuit imprimé (2) présente sur sa bordure extérieure les encoches (11) correspondant aux éléments de blocage (10),
**caractérisé en ce que,**
des lamelles découpables sont placées sur chacun des éléments de blocage (10) et présentent une saillie au niveau de l'encoche (11) correspondante,
lors du placement du circuit imprimé (2) dans le boîtier, la partie des lamelles correspondant à la saillie est séparée des éléments de blocage (10).

2. Capteur de rotation selon la revendication 1, **caractérisé en ce que** les
éléments de blocage (10) présentent une forme de T en vue de dessus.

3. Capteur de rotation selon la revendication 1 ou 2, **caractérisé en ce que** chaque
élément de blocage (10) présente une poche (12).

4. Capteur de rotation selon l'une des revendications 1 à 3, **caractérisé en ce que** le circuit imprimé (2) est bloqué entre le boîtier (1) et un deuxième couvercle (6).

5. Capteur de rotation selon l'une des revendications 1 à 4, **caractérisé en ce que** le circuit imprimé (2) présente un perçage, sur la bordure duquel sont placés des perçages auxiliaires (13).
